# EUROPEAN PATENT APPLICATION

(11) **EP 2 663 013 A1**
(43) Date of publication of application: **13.11.2013**
(21) Application number: 12360034.8
(22) Date of filing: 10.05.2012
(51) Int. Cl.: H04L 5/00, H04L 1/06, H04B 7/02, H04B 7/04

(54) **Uplink MIMO**

(71) Applicant: Alcatel Lucent, 75007 Paris (FR)
(72) Inventor: Wong, Shin Horng, Chippenham, Wiltshire SN15 3YB (GB); Baker, Matthew P. J., Canterbury, kent CT2 9DB (GB)
(74) Representative: Script IP Limited

(57) **Abstract**

A method of encoding uplink data stream control information in a wireless telecommunication network operable to support a plurality of uplink MIMO data streams from user equipment, each data stream being associated with a control channel message having a fixed size. User equipment and a computer program product operable to perform that method. The method comprises: selecting an uplink MIMO transmission regime; obtaining first stream control channel information to allow decoding of data traffic carried on a first data stream; obtaining second stream control channel information to allow decoding of data traffic carried on a second data stream; and encoding the first stream control channel information within a first control channel message to allow independent decoding of the first stream control channel information, and encoding the second stream control channel information within a second control channel message, the second stream control channel information being decodable from the second control channel message in combination with at least one of: selection of the uplink transmission regime and the first control channel message. Aspects and embodiments described allow second stream control channel information to be efficiently encoded within a fixed size message, thus saving bits without losing information, and thus also allows re-use of saved bits within the fixed size message to be used to increase reliability or robustness of information encoded within the second stream control channel.

## Description

### FIELD OF THE INVENTION

The present invention relates to a method of a method of encoding uplink data stream control information in a wireless telecommunication network operable to support a plurality of uplink MIMO data streams from user equipment, each data stream being associated with a control channel message having a fixed size, a computer program product and user equipment operable to perform that method.

### BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed packet access (HSPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless HSPA telecommunication systems, user equipment can move between geographical base station coverage areas. Service provided to user equipment is overseen by a radio network controller (RNC). The radio network controller communicates with user equipment and base stations and determines which base station, and which cell of the geographical area served by that base station each user equipment is primarily connected to (known as the "serving cell"). Furthermore, a radio network controller acts to control and communicate with a base station and user equipment when user equipment moves from the geographical area served by one base station to a geographical area served by another base station.

Multiple-Input, Multiple-Output (MIMO) techniques may be employed within a communications system to improve reliability of communications between a base station and user equipment and to provide for an increase in data throughput in a network.

It will be appreciated that a signal transmitted between user equipment and a base station over a radio channel typically experiences many propagation paths, for example, due to reflection, before arriving at a base station receiver. Multiple-Input, Multiple-Output (MIMO) techniques include the use of transmissions made from more than one antenna provided at user equipment and base stations. Uplink MIMO requires more than one antenna to be provided at user equipment. The antenna are physically separated. A signal may be sent to a base station on one or more of those antenna(s) provided at user equipment. The signal arriving at a base station from two antennas may, assuming the received signals are not too closely correlated, be decoded by the base station and can thus result in an increase in data throughput from user equipment to the base station.

Implementing uplink MIMO within a network may lead to unexpected consequences and possibly decreased overall efficiency of operation of a wireless telecommunication network.

Accordingly, it is desired to improve the operation of a wireless telecommunications network having uplink MIMO functionality.

### SUMMARY

A first aspect provides a method of encoding uplink data stream control information in a wireless telecommunication network operable to support a plurality of uplink MIMO data streams from user equipment, each data stream being associated with a control channel message having a fixed size, the method comprising: selecting an uplink MIMO transmission regime; obtaining first stream control channel information to allow decoding of data traffic carried on a first data stream; obtaining second stream control channel information to allow decoding of data traffic carried on a second data stream; and encoding the first stream control channel information within a first control channel message to allow independent decoding of the first stream control channel information, and encoding the second stream control channel information within a second control channel message, the second stream control channel information being decodable from the second control channel message in combination with at least one of: selection of the uplink transmission regime and the first control channel message.

The first aspect recognizes that uplink MIMO is a method according to which a signal from user equipment can be transmitted over two or more antennas, and that method may allow for improved communication between user equipment and a base station by offering a chance to increase overall uplink data throughput by transmitting more than one data stream.

It will be appreciated that, even if user equipment is provided with two or more transmission antennas, it may not be operable to make use of all its available transmit antennas. A base station needs to be able to separate signals being sent by user equipment on more than one antenna but using the same uplink resource (frequency time and code) in order for MIMO transmissions from that user equipment to be successfully received and decoded.

MIMO is a multi-dimensional technology which increases wireless spectrum utilization by a factor equivalent to the number of transmit streams (also known as MIMO rank). MIMO controls in a linear system are typically described by a matrix. The rank of the matrix is the number of independent rows or columns. It will be understood that and it is most efficient for the overall operation of the network if it is possible to utilize full MIMO rank.

For example, if a user equipment is able to transmit two streams of E-DCH (Enhanced Dedicated Channel) packets in the uplink using the same uplink resource (frequency, time and code) that user equipment is capable of performing up to a rank 2 transmission. It will be understood that a single E-DCH stream from a single antenna would be considered to be a rank 1 transmission.

The data streams, for example, E-DCH, transmitted by user equipment typically comprise one or more E-DPDCH (E-DCH Dedicated Physical Data Channel) channels and one E-DPCCH (E-DCH Dedicated Physical Control Channel). The E-DPDCH carry data traffic and the E-DPCCH carries information to allow decoding of the E-DPDCH. If user equipment is operable to transmit more than one E-DCH, then a secondary E-DCH stream is sent together with the primary E-DCH stream. Similar to the primary E-DCH, the secondary E-DCH will typically comprise one or more secondary E-DPDCH (S-E-DPDCH). The secondary E-DPCCH (S-E-DPCCH) which carries information to allow decoding of the S-E-DPDCH, is not itself carried on the secondary stream, but instead carried on the primary stream. It will be understood that for each antenna the user equipment is also operable to send a pilot channel; in this instance, primary and secondary pilots respectively are referred to as DPCCH and S-DPCCH.

The information carried on a control channel, for example, E-DPCCH, comprises an E-DCH transport format indicator, which indicates transport block size, modulation and coding used on E-DPDCHs, together with a retransmission sequence number for HARQ processes and a so-called "Happy Bit". That control channel information is used by a base station to assist decoding of data carried on a dedicated data traffic channel.

In other words, the E-DPCCH carries information to decode the E-DPDCHs and it comprises: RSN (Retransmission Sequence Number), E-TFCI (E-DCH Transport Format Combination Indicator, which indicates the transport block size) and the Happy Bit (which indicates whether the UE considers the currently granted transmission rate sufficient).

The happy bit is used by a base station to determine whether a user equipment is happy or otherwise with current allocated uplink resource. If the Happy Bit is set to zero, the user equipment is indicating, via signaling to the network, that it would like to be able to transmit at a higher rate than has currently been granted by the network. Conversely, if the Happy Bit is set to 1, the user equipment is indicating that it is happy with its current level of resource grant.

Similarly in UL MIMO operation, the secondary E-DCH stream consists of at least one S-E-DPDCH (Secondary E-DPDCH), supported by an S-E-DPCCH (Secondary E-DPCCH). The S-E-DPCCH is sent using primary precoding vectors (i.e. via the primary stream) whilst the S-E-DPDCHs are sent using secondary precoding vectors (i.e. via the secondary stream). The S-E-DPCCH contains decoding information for the S-E-DPDCHs and the S-E-DPCCH could be encoded using the same format as that of the E-DPCCH. Aspects recognize that some information in the secondary control channel signaling will typically be redundant and simple reuse of the same format as the primary control channel is wasteful of information bits. Furthermore, since the existence of a secondary control channel (on a primary stream) is blind detected by a base station, for example, by energy detection, the presence of the secondary control channel implicitly indicates a rank 2 transmission. The reliability of secondary physical control channel is thus important especially for non-serving cells which do not benefit from beam forming gains in the uplink.

Aspects aim to reduce the number of information bits in a secondary stream control channel signalling, for example, S-E-DPCCH, and to use this reduction to improve the reliability of the remaining bits.

Aspects aim to reduce the number of "information bits" used in a secondary control channel and to use this reduction to improve the reliability of the remaining bits.

According to some aspects and embodiments, the step of encoding may comprise mapping control channel bits o between first and second control channel messages. In some embodiments the step of encoding may consist mapping control channel information bits directly to a physical control channel.

Aspects provide a method for transmitting control information for the secondary stream of a two-stream data transmission, comprising transmitting a first control channel carrying first control information for a first data stream and a second control channel carrying second control information for a second data stream, **characterised in that** part of the control information for the secondary stream is able to be inferred from the first control information and is therefore not transmitted on the second control channel, further **characterised in that** at least one symbol of the second control channel that does not carry control information for the secondary stream is used for at least one of:
(a) increasing the reliability of the second control channel; and
(b) carrying third control information for a third data stream.

Aspects recognise that control information bits typically included within a secondary control channel stream can be reduced without a need to know any less about the operational characteristics of uplink MIMO streams.

In one embodiment, the first stream control channel information comprises: an indication of a transport block size to be used for data transmission on the first data stream and the second stream control channel information comprises: an indication of a transport block size to be used for data transmission on the second data stream.

In one embodiment, the indication of a transport block size to be used for data transmission on the second data stream is encoded within the second control channel message as an offset in relation to the transport block size to be used for data transmission on the first data stream. According to one embodiment, the E-TFCI for a secondary stream is indicated by means of an offset to the E-TFCI in the primary stream, that is to say by means of a differential indicator relative to the E-TFCI of the primary stream. The difference in E-TFCI between the primary and secondary streams (that is to say the difference in transport block size between the two streams) will typically be limited to a relatively small range, since a large transport block size difference may result in inefficient use of rank 2 transmission since in rank 2 transmission, the number of codes used is doubled and inter-stream interference can reduce the quality of the primary stream. Furthermore, since the transmit power on the two streams is the same, the power used for the secondary stream is likely to be excessive if the transport block size selected for the secondary stream is significantly smaller than the transport block size selected for the primary stream. By indicating the difference in index (E-TFCI) or actual difference in transport block size, between the primary and the secondary streams and limiting this difference, the number of information bits required to encode that information on a secondary control channel, for example, S-E-DPCCH, may be reduced.

In one embodiment, the offset comprises a predetermined offset associated with the selection of an uplink MIMO transmission regime. According to some embodiments, a number of pre-selected or pre-set offsets for the E-TFCI of the secondary stream relative to that of the primary stream can be preconfigured, for example, by being defined in the specifications or by being determined by the network, for example a base station or RNC, and signaled to the UE. Each predetermined offset may have an associated index. Thus according to such embodiments, an uplink MIMO capable UE need only to indicate which offset is being used by signalling an associated index relating to the selected offset. In the limiting case where only one offset is available or preconfigured, there may be no need for a dedicated bit to indicate the selected transport block size for a secondary stream in the secondary control channel since the secondary stream would be restricted to use a transport block size having a fixed offset to that of the primary stream. In one embodiment, the indication of a transport block size to be used for data transmission on the second data stream is encoded within the second control channel message as one of a sub-set of predetermined offsets associated with the selection of an uplink MIMO transmission regime.

In one embodiment, the indication of a transport block size to be used for data transmission on the second data stream is encoded within the second control channel message as a sub-set of available transport block sizes associated with the selection of an uplink MIMO transmission regime. Typically rank 2 uplink transmission is only allowed if both the primary and secondary streams use 2xSF2 + 2xSF4 codes (maximum number of codes). Since only a subset of E-TFCIs (indicative of transport block size)use 2xSF2+2xSF4 codes, the number of available E-TFCIs for a secondary stream data transmission is reduced. According to one embodiment, a secondary control channel is operable to encode transport block size using a scaled down E-TFCI table that consists of fewer E-TFCI indexes. The base station receiving the secondary control channel is alerted to the different encoding method and a smaller E-TFCI selection by inferring from the fact that a secondary control channel is transmitted on the primary stream.

In one embodiment, the first stream control channel information comprises: an indication of whether the user equipment is satisfied with a data transmission rate allocated by the network, and the second stream control channel information comprises: an indication of whether the user equipment is satisfied with a data transmission rate allocated by the network, and wherein only the first control channel message encodes the indication of whether the user equipment is satisfied with a data transmission rate allocated by the network. The Happy Bit in a secondary stream is redundant since it does not make sense for a UE to be happy in the primary stream and not happy in the secondary stream, or not happy in a primary stream yet happy in a secondary stream.

In one embodiment, the second control channel message comprises repetition of at least a portion of the encoded second stream control channel information, the second stream control channel information being decodable from the second control channel message in combination with at least one of: selection of the uplink transmission regime and the first control channel message. According to some embodiments, some or all of the control info bits that are "saved" on the secondary control channel by previously mentioned techniques may be used to improve the reliability of the secondary control channel.

Accordingly, according to one embodiment, some or all of the unused or "saved" control information bits can be used to repeat the reduced transport block information bits, for example, an encoded E-TFCI or E-TFCI offset. Repetition of that information can improve the reliability of, for example, the E-TFCI and can assist when blind detecting the presence or absence of a secondary control channel, since a detector provided at a base station can exploit prior knowledge that certain bits are repeated when reaching a decision as to whether a secondary control channel is present or not.

In one embodiment, the second control channel message comprises a pilot message comprising a preconfigured bit pattern. According to some embodiments, some or all of the saved control information bits may be used as pilot bits, that is to say, sent in a fixed, or predetermined, pattern. Accordingly, the pilot bits may be known to a base station and thus may be used to enhance the detection reliability of the secondary control channel on a primary stream.

In one embodiment, the second control channel message comprises: further stream control channel information. According to some embodiments, some or all of the saved information bits may be used to signal control information which would be needed for E-DCH transmission with a rank greater than 2. For example, if the set of possible E-DCH transmission configurations were to be extended to include rank 3 and 4 transmissions, then a further indication of the rank of the E-DCH may be required. Accordingly some embodiments provide a means to carry rank information on a secondary control channel without needing 3rd and 4th control channels, by using the bits saved. Furthermore, some embodiments allow the saved bits to be used to indicate transport block size for further data streams.

According to some embodiments, a reduced set of transport block sizing codes, for example, E-TFCI, may be used for the control channel of the primary E-DCH stream. It will be appreciated that for a rank 2 transmission, the primary stream is also limited to a subset of transport block sizing codes.

Some embodiments may employ combinations of described implementations, for example, some of the saved control information bits may be used to repeat reduced E-TFCI bits, other saved bits may be used to implement a pilot sequence, and further saved bits may be used to indicate control information for E-DCH transmissions with rank greater than 2.

A second aspect provides a computer program product operable, when executed on a computer, to perform the method of the first aspect.

A third aspect provides user equipment operable to encode uplink data stream control information in a wireless telecommunication network operable to support a plurality of uplink MIMO data streams from the user equipment, each data stream being associated with a control channel message having a fixed size, the user equipment comprising: transmission regime logic operable to select an uplink MIMO transmission regime; control logic operable to obtain first stream control channel information to allow decoding of data traffic carried on a first data stream and second stream control channel information to allow decoding of data traffic carried on a second data stream; and encoding logic operable to encode the first stream control channel information within a first control channel message to allow independent decoding of the first stream control channel information, and encoding the second stream control channel information within a second control channel message, the second stream control channel information being decodable from the second control channel message in combination with at least one of: selection of the uplink transmission regime and the first control channel message.

In one embodiment, the first stream control channel information comprises: an indication of a transport block size to be used for data transmission on the first data stream and the second stream control channel information comprises: an indication of a transport block size to be used for data transmission on the second data stream.

In one embodiment, the indication of a transport block size to be used for data transmission on the second data stream is encoded within the second control channel message as an offset in relation to the transport block size to be used for data transmission on the first data stream.

In one embodiment, the offset comprises a predetermined offset associated with the selection of an uplink MIMO transmission regime.

In one embodiment, the indication of a transport block size to be used for data transmission on the second data stream is encoded within the second control channel message as one of a sub-set of predetermined offsets associated with the selection of an uplink MIMO transmission regime.

In one embodiment, the indication of a transport block size to be used for data transmission on the second data stream is encoded within the second control channel message as a sub-set of available transport block sizes associated with the selection of an uplink MIMO transmission regime.

In one embodiment, the first stream control channel information comprises: an indication of whether the user equipment is satisfied with a data transmission rate allocated by the network, and the second stream control channel information comprises: an indication of whether the user equipment is satisfied with a data transmission rate allocated by the network, and wherein only the first control channel message encodes the indication of whether the user equipment is satisfied with a data transmission rate allocated by the network.

In one embodiment, the second control channel message comprises repetition of the encoded second stream control channel information, the second stream control channel information being decodable from the second control channel message in combination with at least one of: selection of the uplink transmission regime and the first control channel message.

In one embodiment, the second control channel message comprises a pilot message comprising a preconfigured bit pattern.

In one embodiment, the second control channel message comprises: further stream control channel information.

A fourth aspect provides a method of decoding uplink data stream control information in a wireless telecommunication network operable to support a plurality of uplink MIMO data streams from user equipment, each data stream being associated with a control channel message having a fixed size, the method comprising: detecting a selected uplink MIMO transmission regime; decoding first stream control channel information encoded within a first control channel message and decoding second stream control channel information within a second control channel message, the second stream control channel information being decodable from the second control channel message in combination with at least one of: the detected selection of uplink MIMO transmission regime and the first control channel message.

It will be appreciated that embodiments of the fourth aspect allow the decoding of analogous embodiments described previously in relation to the first, second and third aspects.

A fifth aspect provides a computer program product operable, when executed on a computer, to perform the method of the fourth aspect.

A sixth aspect provides a base station or network control node, for example, RNC, operable to decode uplink data stream control information in a wireless telecommunication network operable to support a plurality of uplink MIMO data streams from user equipment, each data stream being associated with a control channel message having a fixed size, the base station comprising: detection logic operable to detect a selected uplink MIMO transmission regime; decoding logic operable to decode a first stream control channel information encoded within a first control channel message and decoding second stream control channel information within a second control channel message, the second stream control channel information being decodable from the second control channel message in combination with at least one of: the detected selection of uplink MIMO transmission regime and the first control channel message.

A further aspect provides a method of encoding data stream control information in a wireless telecommunication network operable to support a plurality of MIMO data streams from a transmitting device, each data stream being associated with a control channel message having a fixed size, said method comprising: selecting a MIMO transmission regime; obtaining first stream control channel information to allow decoding of data traffic carried on a first data stream; obtaining second stream control channel information to allow decoding of said data traffic carried on a second data stream; and encoding said first stream control channel information within a first control channel message to allow independent decoding of said first stream control channel information, and encoding said second stream control channel information within a second control channel message, said second stream control channel information being decodable from said second control channel message in combination with at least one of: selection of said transmission regime and said first control channel message.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a wireless telecommunications system according to one embodiment;
Figure 2 illustrates schematically typical propagation paths between a transmitter and a receiver;
Figure 3 illustrates schematically an implementation of uplink MIMO at user equipment according to one embodiment;
Figure 4 illustrates schematically a control message format for transmission on an E-DPCCH; and
Figure 5 illustrates a secondary control channel encoding pattern according to one embodiment.

### DETAILED DESCRIPTION OF THE DRAWINGS

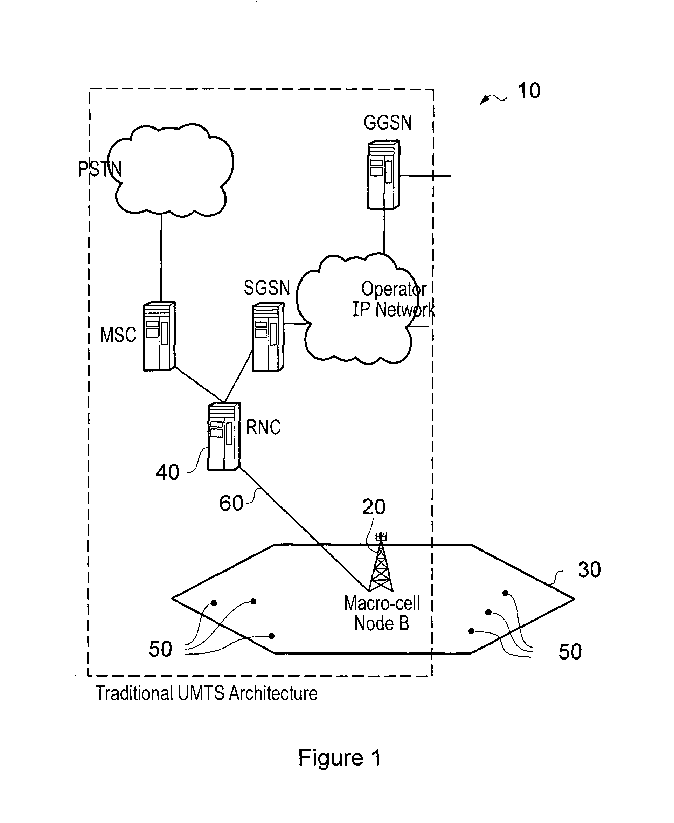

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as, for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

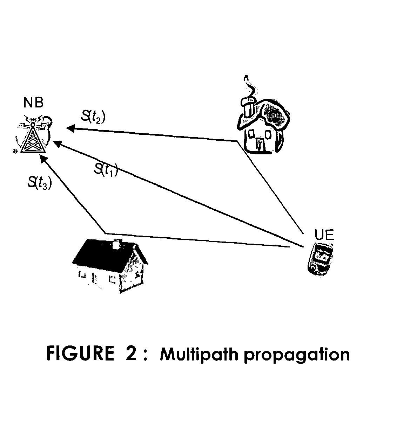

Figure 2 illustrates schematically typical propagation paths between a transmitter, in this case, user equipment 50 and a receiver on a base station 20. A signal transmitted over a radio channel typically experiences many propagation paths, for example, due to reflection, before arriving at a receiver. Those signal paths are represented as *S*(*t*₁), *S*(*t*₂), and *S*(*t*₃) in Figure 2, and each arrive at different time, power and phase at the receiver. Changes to the transmitter position or the transmitter surroundings causes the multiple propagation path signals to change, leading to fluctuation in the signal at the receiver. A base station can decode different MIMO data streams carried on a radio channel provided that they transmitted by spatially separate antenna and provided the streams are not too well correlated by the time they reach the base station.

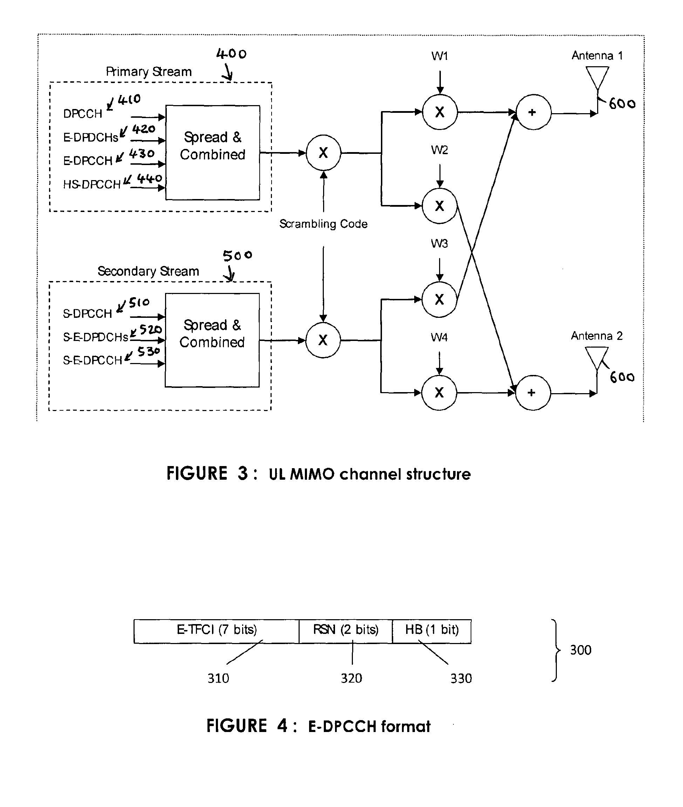

Figure 3 illustrates schematically an example implementation of MIMO uplink techniques at a user equipment having two transmit antennas. In the structure illustrated in Figure 3, user equipment is operable to transmit a primary stream 400 and a secondary stream 500. The primary stream comprises a pilot channel (DPCCH 410), Dedicated Physical Data Channels 420, control channels 430 and a downlink feedback channel 440. The secondary stream 500 comprises a pilot channel 510, Dedicated Physical Data Channels 520 and control channels 530. The weights W1, W2, W3 and W4 are pre-coding weights signaled by a base station to user equipment to ensure effective MIMO transmissions from antenna 600.

More than one stream of information can be sent using the same time frequency and code resource in MIMO if the paths taken by the streams received by a base station are uncorrelated. Streams of data sent by user equipment are likely to experience different gains (that is to say, different Eigen values of a MIMO channel matrix). For an uplink MIMO case operating according to a transmission scenario in which two streams are supported, the primary stream is decoded usually with a higher gain than that of the secondary stream; that is to say, the primary stream is often better received than the secondary stream. As a result, the primary stream is usually selected as the stream which also contains other essential control channels (for example, downlink feedback information).

In order to operate an uplink MIMO (Multiple Input, Multiple Output), user equipment is able to transmit two or more streams of E-DCH (Enhanced Dedicated Channel) in the uplink using the same uplink resource. That is to say, the uplink resource allocated to the user equipment uses the same frequency, time and code that is spatially separated by transmission on two or more different antenna. As a result, user equipment is capable of performing what is known as a "rank 2" transmission. A single E-DCH stream would be referred to as a "rank 1" transmission.

Traditionally, an E-DCH transport channel is structured such that E-DCH transport channel data is carried on one or more E-DPDCHs (E-DCH Dedicated Physical Data Channels) and associated control signaling is carried on an E-DPCCH (E-DCH Dedicated Physical Control Channel). The information carried on the Dedicated Physical Control Channel comprises an E-DCH transport format indicator which indicates transport block size, modulation and coding used on the Dedicated Physical Data Channels, a retransmission sequence number which is used in HARQ processes, and a "Happy Bit".

The Happy Bit is used by user equipment to indicate to the network, and in particular via its serving base station, whether it would like to be able to transmit at a higher rate than it has currently been granted, or whether it is happy with its current level of uplink resource grant. If the Happy Bit is set to zero, it is indicative that the user equipment would ideally like to be able to transmit at a higher rate than has currently been granted by a base station, whereas if the Happy Bit is set to 1, the user equipment is indicating that it is happy with its current rate of grant.

If user equipment is operable to support uplink MIMO, a second E-DCH stream is carried on a secondary E-DPDCH (S-E-DPDCH) and a new control channel is introduced to carry corresponding control information, namely a secondary E-DPCCH. That secondary control channel is carried on the primary stream and the presence, or absence of the second control channel can be used to implicitly indicate the rank of an uplink transmission. It will be understood that the S-E-DPDCCH and S-E-DPCCH have similar functions to those of the E-DPDCH and E-DPCCH provided on a primary stream. If a base station and user equipment are configured such that they can support MIMO operation, a base station is operable to evaluate uplink radio condition at user equipment and determine whether that user equipment is a suitable candidate to transmit on according to a rank 1 or rank 2 (or greater) signaling regime. That maximum determined rank is usually signaled to the user equipment by the base station.

At the user equipment, the user equipment is operable to evaluate whether it is able to utilize its full rank or whether network conditions are such that the signaled maximum rank indication received from a base station is not possible and a lower rank transmission is more appropriate. For example, user equipment may evaluate whether it has sufficient power to transmit using the maximum indicated rank (in this case, rank 2), or whether a higher overall throughput may be achieved by simply using rank 1 signaling. Thus, a rank indicated by a base station to user equipment represents a maximum rank on which user equipment may be allowed to transmit within the network.

Figure 4 illustrates schematically a control message format for transmission on an E-DPCCH. The control message 300 generally comprises seven bits allocated to E-TFCI signaling 310, two bits for Retransmission Sequence Number (RSN) signaling 320 and one bit as a Happy Bit 330. The E-TFCI 410 indicates the transport block size used for the corresponding E-DPDCH and the RSN indicates the *n*^{th} HARQ retransmission of the corresponding E-DPDCH. The Happy Bit 330 indicates whether the user equipment would benefit from having more uplink resource where a value of 1 indicates that the user equipment is happy with current uplink resource, whilst a value of zero indicates that the user equipment is not happy with the current resource and would benefit from having more.

The control message format for transmission on a secondary MIMO channel is expected to be analogous to that shown in Figure 4. That is to say, the S-E-DPCCH would typically contain the same fields as that shown in Figure 4.

It will be appreciated that some information in the secondary control channel, for example, S-E-DPCCH, is redundant and is simply reusing the same format as the primary control channel information bits. The secondary control channel is blind detected at a base station (NB), for example, by energy detection, and the presence of the secondary control channel is used to implicitly indicate uplink MIMO operation, for example, a rank 2 transmission. It will be appreciated that the reliability of a secondary control channel is important especially for non-serving cells which do not benefit from beam forming gains in the uplink.

Aspects aim to reduce the number of "information bits" used in a secondary control channel and to use this reduction to improve the reliability of the remaining bits.

Aspects provide a method for transmitting control information for the secondary stream of a two-stream data transmission, comprising transmitting a first control channel carrying first control information for a first data stream and a second control channel carrying second control information for a second data stream, **characterised in that** part of the control information for the secondary stream is able to be inferred from the first control information and is therefore not transmitted on the second control channel, further **characterised in that** at least one symbol of the second control channel that does not carry control information for the secondary stream is used for at least one of:
(c) increasing the reliability of the second control channel; and
(d) carrying third control information for a third data stream.

Aspects and embodiments are described in more detail below.

Aspects recognise that control information bits typically included within a secondary control channel stream can be reduced without a need to know any less about the operational characteristics of uplink MIMO streams.

Typically rank 2 uplink transmission is only allowed if both the primary and secondary streams use 2xSF2 + 2xSF4 codes (maximum number of codes). Since only a subset of E-TFCIs (indicative of transport block size)use 2xSF2+2xSF4 codes, the number of available E-TFCIs for a secondary stream data transmission is reduced.

The Happy Bit in a secondary stream is redundant since it does not make sense for a UE to be happy in the primary stream and not happy in the secondary stream, or not happy in a primary stream yet happy in a secondary stream.

As a result of the reduced number of E-TFCIs and/or the redundant Happy Bit it can be seen that fewer info bits are required in a secondary control channel.

According to one embodiment, a secondary control channel is operable to encode transport block size using a scaled down E-TFCI table that consists of fewer E-TFCI indexes. The base station receiving the secondary control channel is alerted to the different encoding method and a smaller E-TFCI selection by inferring from the fact that a secondary control channel is transmitted on the primary stream.

According to one embodiment, the E-TFCI for a secondary stream is indicated by means of an offset to the E-TFCI in the primary stream, that is to say by means of a differential indicator relative to the E-TFCI of the primary stream. The difference in E-TFCI between the primary and secondary streams (that is to say the difference in transport block size between the two streams) will typically be limited to a relatively small range, since a large transport block size difference may result in inefficient use of rank 2 transmission since in rank 2 transmission, the number of codes used is doubled and inter-stream interference can reduce the quality of the primary stream. Furthermore, since the transmit power on the two streams is the same, the power used for the secondary stream is likely to be excessive if the transport block size selected for the secondary stream is significantly smaller than the transport block size selected for the primary stream. By indicating the difference in index (E-TFCI) or actual difference in transport block size, between the primary and the secondary streams and limiting this difference, the number of information bits required to encode that information on a secondary control channel, for example, S-E-DPCCH, may be reduced.

According to some embodiments, a number of pre-selected or pre-set offsets for the E-TFCI of the secondary stream relative to that of the primary stream can be preconfigured, for example, by being defined in the specifications or by being determined by the network, for example a base station or RNC, and signaled to the UE. Each predetermined offset may have an associated index. Thus according to such embodiments, an uplink MIMO capable UE need only to indicate which offset is being used by signalling an associated index relating to the selected offset. In the limiting case where only one offset is available or preconfigured, there may be no need for a dedicated bit to indicate the selected transport block size for a secondary stream in the secondary control channel since the secondary stream would be restricted to use a transport block size having a fixed offset to that of the primary stream.

According to some embodiments, some or all of the control info bits that are "saved" on the secondary control channel by previously mentioned techniques may be used to improve the reliability of the secondary control channel.

Accordingly, according to one embodiment, some or all of the unused or "saved" control information bits can be used to repeat the reduced transport block information bits, for example, an encoded E-TFCI or E-TFCI offset. Repetition of that information can improve the reliability of, for example, the E-TFCI and can assist when blind detecting the presence or absence of a secondary control channel, since a detector provided at a base station can exploit prior knowledge that certain bits are repeated when reaching a decision as to whether a secondary control channel is present or not.

According to some embodiments, some or all of the saved control information bits may be used as pilot bits, that is to say, sent in a fixed, or predetermined, pattern. Accordingly, the pilot bits may be known to a base station and thus may be used to enhance the detection reliability of the secondary control channel on a primary stream.

According to some embodiments, some or all of the saved information bits may be used to signal control information which would be needed for E-DCH transmission with a rank greater than 2. For example, if the set of possible E-DCH transmission configurations were to be extended to include rank 3 and 4 transmissions, then a further indication of the rank of the E-DCH may be required. Accordingly some embodiments provide a means to carry rank information on a secondary control channel without needing 3rd and 4th control channels, by using the bits saved. Furthermore, some embodiments allow the saved bits to be used to indicate transport block size for further data streams.

According to some embodiments, a reduced set of transport block sizing codes, for example, E-TFCI, may be used for the control channel of the primary E-DCH stream. It will be appreciated that for a rank 2 transmission, the primary stream is also limited to a subset of transport block sizing codes.

Some embodiments may employ combinations of described implementations, for example, some of the saved control information bits may be used to repeat reduced E-TFCI bits, other saved bits may be used to implement a pilot sequence, and further saved bits may be used to indicate control information for E-DCH transmissions with rank greater than 2.

In a particular implementation provided by way of example, a network imposes a difference in E-TFCI between a primary and secondary stream which is not more than 32, otherwise user equipment is operable to use a rank 1 transmission regime.

For a secondary stream, user equipment operating according to this particular implementation needs only to indicate a difference in E-TFCI between the primary and the secondary streams. It will be appreciated that the secondary stream E-TFCI is always smaller than that of the primary stream.

The step size indicated by the user equipment in this implementation is 2 E-TFCI steps. Thus the number of information bits required to indicate the E-TFCI used on the secondary stream is:
- Max E-TFCI difference between primary and secondary streams = 32
- Step size indicated by the UE = 2
- Number of step size = 32/2 = 16
- Number of bits required to indicate 16 □E-TFCI steps = 4

The number of bits unused in S-E-DPCCH:
- 7 bits in current E-TFCI field - 4 bits used to indicate 16 E-TFCI step sizes = 3 bits
- Redundant Happy Bit in S-E-DPCCH = 1 bit
- Total unused bits = 3 bits + 1 bit = 4 bits

The 4 "unused" or saved bits can be used to repeat the 4 bits used to indicate the 16 □E-TFCI steps, thereby improving the reliability of the E-TFCI information.

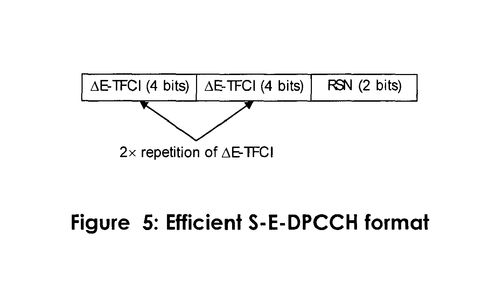

The format for the S-E-DPCCH in this example is shown in Figure 5.

This invention allows an efficient S-E-DPCCH with improved reliability and detection probability to be transmitted.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of encoding uplink data stream control information in a wireless telecommunication network operable to support a plurality of uplink MIMO data streams from user equipment, each data stream being associated with a control channel message having a fixed size, said method comprising:
selecting an uplink MIMO transmission regime;
obtaining first stream control channel information to allow decoding of data traffic carried on a first data stream;
obtaining second stream control channel information to allow decoding of said data traffic carried on a second data stream; and
encoding said first stream control channel information within a first control channel message to allow independent decoding of said first stream control channel information, and encoding said second stream control channel information within a second control channel message, said second stream control channel information being decodable from said second control channel message in combination with at least one of: selection of said uplink transmission regime and said first control channel message.

2. A method according to claim 1, wherein said first stream control channel information comprises: an indication of a transport block size to be used for data transmission on said first data stream and said second stream control channel information comprises: an indication of a transport block size to be used for data transmission on said second data stream.

3. A method according to claim 2, wherein said indication of a transport block size to be used for data transmission on said second data stream is encoded within said second control channel message as an offset in relation to said transport block size to be used for data transmission on said first data stream.

4. A method according to claim 3, wherein said offset comprises a predetermined offset associated with said selection of an uplink MIMO transmission regime.

5. A method according to any one of claims 2 to 4, wherein said indication of a transport block size to be used for data transmission on said second data stream is encoded within said second control channel message as one of a sub-set of predetermined offsets associated with said selection of an uplink MIMO transmission regime.

6. A method according to any one of claims 2 to 5, wherein said indication of a transport block size to be used for data transmission on said second data stream is encoded within said second control channel message as a sub-set of available transport block sizes associated with said selection of an uplink MIMO transmission regime.

7. A method according to any preceding claim, wherein said first stream control channel information comprises: an indication of whether said user equipment is satisfied with a data transmission rate allocated by said network, and said second stream control channel information comprises: an indication of whether said user equipment is satisfied with a data transmission rate allocated by said network, and wherein only said first control channel message encodes said indication of whether said user equipment is satisfied with a data transmission rate allocated by said network.

8. A method according to any preceding claim, wherein said second control channel message comprises repetition of said encoded second stream control channel information, said second stream control channel information being decodable from said second control channel message in combination with at least one of: selection of said uplink transmission regime and said first control channel message.

9. A method according to any preceding claim, wherein said second control channel message comprises a pilot message comprising a preconfigured bit pattern.

10. A method according to any preceding claim, wherein said second control channel message comprises: further stream control channel information.

11. A computer program product operable, when executed on a computer, to perform the method of any one of claims 1 to 10.

12. User equipment operable to encode uplink data stream control information in a wireless telecommunication network operable to support a plurality of uplink MIMO data streams from said user equipment, each data stream being associated with a control channel message having a fixed size, said user equipment comprising:
transmission regime logic operable to select an uplink MIMO transmission regime;
control logic operable to obtain first stream control channel information to allow decoding of data traffic carried on a first data stream and second stream control channel information to allow decoding of said data traffic carried on a second data stream; and
encoding logic operable to encode said first stream control channel information within a first control channel message to allow independent decoding of said first stream control channel information, and encoding said second stream control channel information within a second control channel message, said second stream control channel information being decodable from said second control channel message in combination with at least one of: selection of said uplink transmission regime and said first control channel message.

13. A method of decoding uplink data stream control information in a wireless telecommunication network operable to support a plurality of uplink MIMO data streams from user equipment, each data stream being associated with a control channel message having a fixed size, said method comprising:
detecting a selected uplink MIMO transmission regime;
decoding first stream control channel information encoded within a first control channel message and decoding second stream control channel information within a second control channel message, said second stream control channel information being decodable from said second control channel message in combination with at least one of: said detected selection of uplink MIMO transmission regime and said first control channel message.

14. A computer program product operable, when executed on a computer, to perform the method of claim 13.

15. A base station operable to decode uplink data stream control information in a wireless telecommunication network operable to support a plurality of uplink MIMO data streams from user equipment, each data stream being associated with a control channel message having a fixed size, said base station comprising:
detection logic operable to detect a selected uplink MIMO transmission regime;
decoding logic operable to decode a first stream control channel information encoded within a first control channel message and decoding second stream control channel information within a second control channel message, said second stream control channel information being decodable from said second control channel message in combination with at least one of: said detected selection of uplink MIMO transmission regime and said first control channel message.
